# EUROPEAN PATENT APPLICATION

(11) **EP 1 010 513 A2**
(43) Date of publication of application: **21.06.2000**
(21) Application number: 99309159.4
(22) Date of filing: 17.11.1999
(51) Int. Cl.: B29C 53/82

(54) **Foam mandrel for a filament wound composite casing**

(30) Priority: 15.12.1998 US 211742
(71) Applicant: UNITED TECHNOLOGIES CORPORATION, Hartford, CT 06101 (US)
(72) Inventor: Goodson, Forrest Ray, San Jose, California 95123 (US); Knaresboro, Donald Lee, San Jose, California 95120 (US); Inman, Frank Stephen, Morgan Hill, California 95037 (US)
(74) Representative: Leckey, David Herbert

(57) **Abstract**

A filament wound composite casing 14 may be made by providing a mandrel 2 that has an outer surface 4 of a desired shape and comprises a friable foam material. One or more filaments 18 are wound around the mandrel's outer surface 4 to form an uncured casing that has at least one access port 16 and the casing is cured to form a cured, composite casing. The mandrel 2 and composite casing 14 are separated by fracturing the mandrel 2 into readily removable pieces so substantially all the mandrel releases from the composite casing 14. The mandrel pieces are removed from the composite casing 14 through the access port 16.

## Description

The present invention is directed to a mandrel for shaping a filament wound composite casing.

Filament wound composite casings are used for a variety of applications, such as pressure vessels, gasoline tanks, and rocket motor casings. Typically, such casings are self-supporting, cylindrical structures that have a relatively small access port at one or both ends. The casings are made by winding one or more filaments or fibers around a mandrel that imparts a desired shape to the casing and supports the casing during the manufacturing process. The filaments are either pre-impregnated with a curable resin or impregnated with a curable resin during or after winding. After the winding operation is complete, the resin is cured with the mandrel still in place to form a cured, composite casing. The mandrel is then removed from the casing to create a hollow interior space within the casing.

Over the years, several different types of mandrels have been used to manufacture filament wound composite casings. One type of mandrel comprises a mixture of casting sand and a binder, such as polyvinyl alcohol, often formed over a wire mesh structure. After curing the binder and machining the mandrel to desired dimensions, the mandrel is dimensionally stable and can be used in the winding process as described above. After winding, the mandrel is removed from the cured casing by washing it with a solvent such as water to dissolve the binder, collapsing the mandrel, and removing wet sand from inside the casing. While this type of mandrel has been used successfully in many applications, particularly prototyping applications that required frequent design changes, it is relatively difficult to remove from a cured composite casing. Moreover, depending on the solvent used to dissolve the binder, the waste from the process may need special handling.

Another common type of mandrel comprises a number of small, precisely machined metal pieces that form the desired shape when fitted together. This type of mandrel lends itself to repeated use, but is expensive to manufacture and laborious to set up. It can be even more difficult to dismantle this type of mandrel in the confined spaces of a cured composite casing than the sand and binder type mandrel. Moreover, this type of mandrel is not well suited for applications that require frequent design changes.

Therefore, what is needed in the industry is a mandrel that can be easily formed into a desired shape at reasonable cost, is easy to handle, and can be quickly removed from the finished casing.

The present invention is directed towards a mandrel that can be easily formed into a desired shape at reasonable cost, is easy to handle, and can be quickly removed form the finished casing.

One aspect of the invention includes a method of making a filament wound composite casing. A mandrel that has an outer surface of a desired shape and comprises a friable foam material is provided. One or more filaments are wound around the mandrel's outer surface to form an uncured casing that has at least one access port and the casing is cured to form a cured, composite casing. The mandrel and composite casing are separated by fracturing the mandrel into a plurality of readily removable pieces so substantially all the mandrel releases from the composite casing. The mandrel pieces are removed from the composite casing through the access port.

Another aspect of the invention includes a mandrel, comprising a friable foam material, useful for forming a filament wound composite casing having an outer surface with a desired shape.

Some embodiments of the present invention will now be described by way of example only and with reference to the accompanying drawings, in which:

Figure 1 shows a monolithic foam mandrel of the present invention.

Figure 2 shows a segmented foam mandrel of the present invention.

Figure 3 shows a mandrel of the present invention mounted on a winding device.

Figure 4 shows a pressure bladder disposed inside a hollow core of a mandrel of the present invention.

Figure 5 shows a bladder disposed around an outer surface of a mandrel of the present invention.

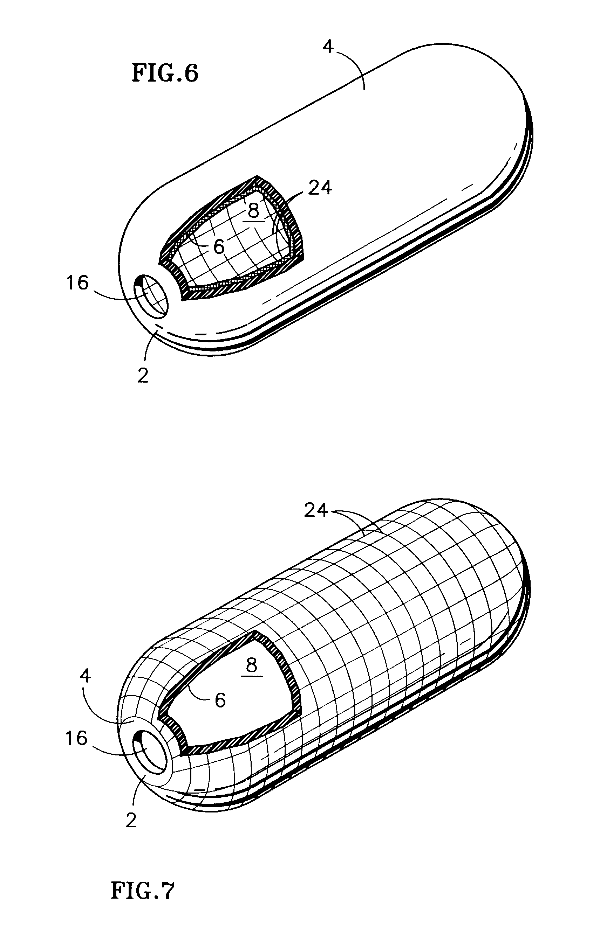

Figure 6 shows a wire mesh embedded inside a mandrel of the present invention.

Figure 7 shows a wire mesh disposed around an outer surface of a mandrel of the present invention.

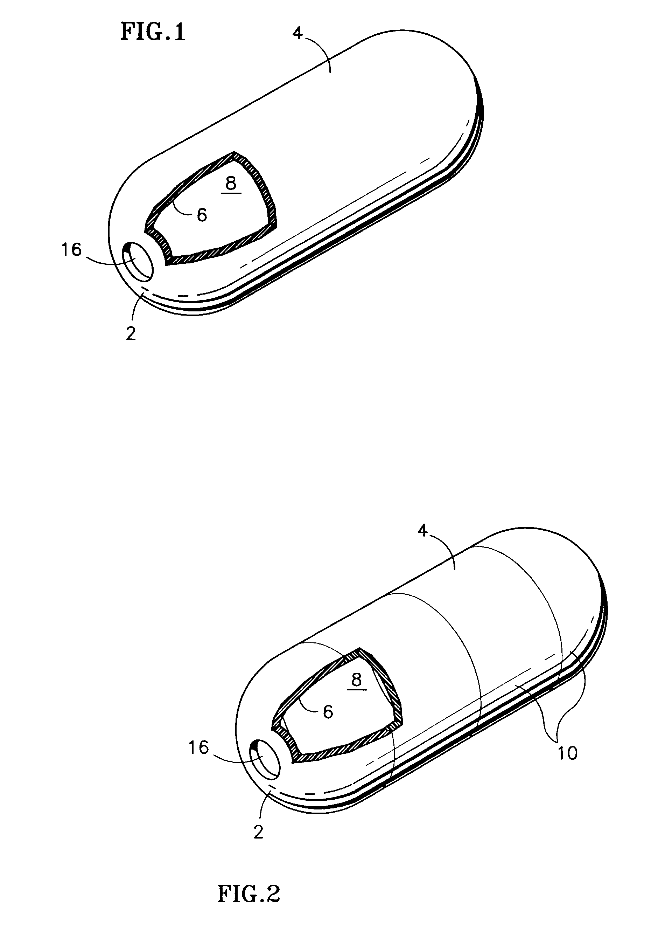

As shown in Fig. 1, a foam mandrel **2** of the present invention has an outer surface **4** that conforms to a desired shape of a composite casing to be produced with it and may have an inner surface **6** that defines an optional hollow core **8**. The mandrel **2** may be monolithic or may comprise a plurality of segments **10** as shown in Fig. 2.

Foam mandrels **2** of the present invention may be made from any foam material that is dimensionally stable when subjected to compression forces imposed on it during a filament winding or cure operation, yet is friable when subjected to compression forces designed to fracture the mandrel. In the context of this application, the term friable means capable of being broken into readily removable pieces. Preferably, the readily removable pieces will have a maximum dimension of about 1 inch (2.5 cm) and most preferably may be granular or powder-like. For example, the foam material should be dimensionally stable when subjected to compression forces of up to about 100 pounds per square inch (psi) (690 kPa) during winding and cure. Preferably, the foam material will be dimensionally stable when subjected to compression forces during winding and cure of up to about 190 psi (1310 kPa). The foam material should, however, be friable when subjected to compression forces of about 200 psi (1380 kPa) or greater. Preferably, the foam material will be friable when subjected to compression forces up to about 300 psi (2070 kPa).

Phenolic foams are among the foam materials that have the desired characteristics. Phenolic foams are commercially available from a variety of sources, including American Foam Products (Painsville, Ohio) and Jiffy Foam, Inc. (Newport, Rhode Island). One preferred foam, which is available from Jiffy Foam, Inc. is manufactured by reacting a phenolic resin with urea and an isocyanate. Regardless of the particular foam composition, it is preferred that the foam will be formed with unrestricted blowing agents, such as water, to minimize environmental impact.

The selected foam material may be formed into the desired shape by any convenient method or combination of methods. For example, the foam material may be cast to net or near net shape by casting a liquid foam in a mold using conventional techniques. If particular details of the desired shape are inconvenient to mold, for example the inner surfaces **6**, they may be machined into a near net shape casting. Alternately, the entire mandrel **2** may be machined from a block of bulk foam material. This approach may be particularly appropriate for prototyping applications that do not justify the cost of fabricating a mold for casting. To display the desired dimensional stability, the foam should have a density of at least about 10 lbs/ft³ (0.16 g/cm³) and, as discussed above, be dimensionally stable when subjected to compressive forces of up to about 100 psi (690 kPa) during winding and cure. Preferably the foam will have a density of at least about 10 lbs/ft³ (0.16 g/cm³) and be dimensionally stable when subjected to compressive forces of up to about 190 psi (1310 kPa) during winding and cure.

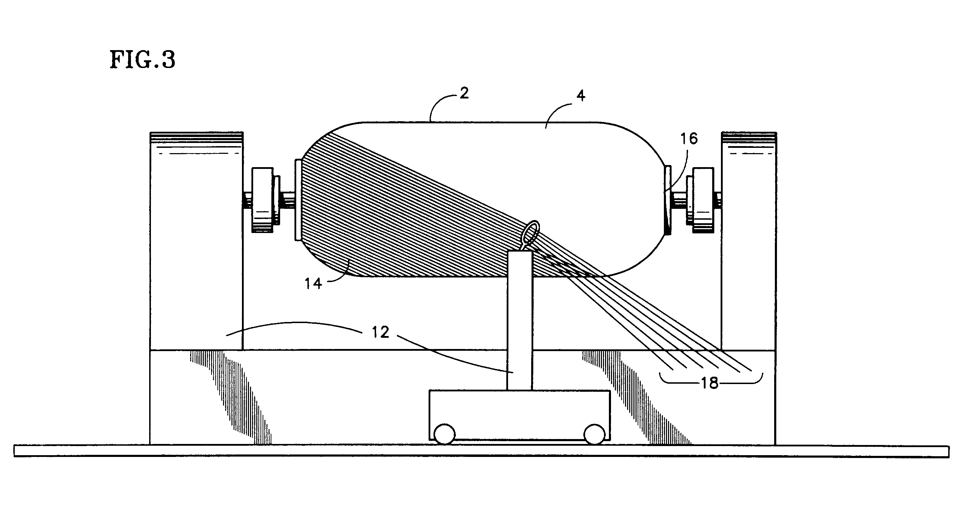

After the mandrel **2** is formed into the desired shape, it may be installed into a winding device **12** as shown in Fig. 3. Optionally, a release agent may be applied to the mandrel **2** to make it easier to remove the mandrel **2** after winding and cure. Suitable release agents include polytetrafluoroethylene, other fluorochemical compounds, and resin based formulations, all of which are commercially available from the McLube division of McGee Industries, Inc (Aston, Pennsylvania). The desired composite casing **14** is then wound over the mandrel **2**, typically forming at least one access port **16**, removed from the winding device **12**, and cured using conventional techniques.

The mandrel **2** of the present invention is compatible with a variety of filaments **18**, winding techniques, curable resins, and curing cycles. Suitable filaments include carbon fiber, glass, and Kevlar® (i.e., poly-paraphenylene terephthalamide) filaments, which are commercially available from manufactures such as Hercules, Inc. (Wilmington, Delaware), Owens Corning (Toledo, Ohio), and E. I. Du Pont De Nemours and Company (Wilmington, Delaware). As is known in the art, the filaments may be pre-impregnated with a curable resin or may be impregnated with a curable resin during or after the winding process. Suitable resins include amine and anhydride cured epoxies, which are commercially available from manufacturers such as The Dow Chemical Company (Midland, Michigan) and Shell Chemical Company (Houston, Texas). Foam mandrels **2** of the present invention are compatible with all conventional cure cycles, such as those that expose mandrels **2** to temperatures up to about 350°F (160°C) and pressures up to about 100 psi (690 kPa).

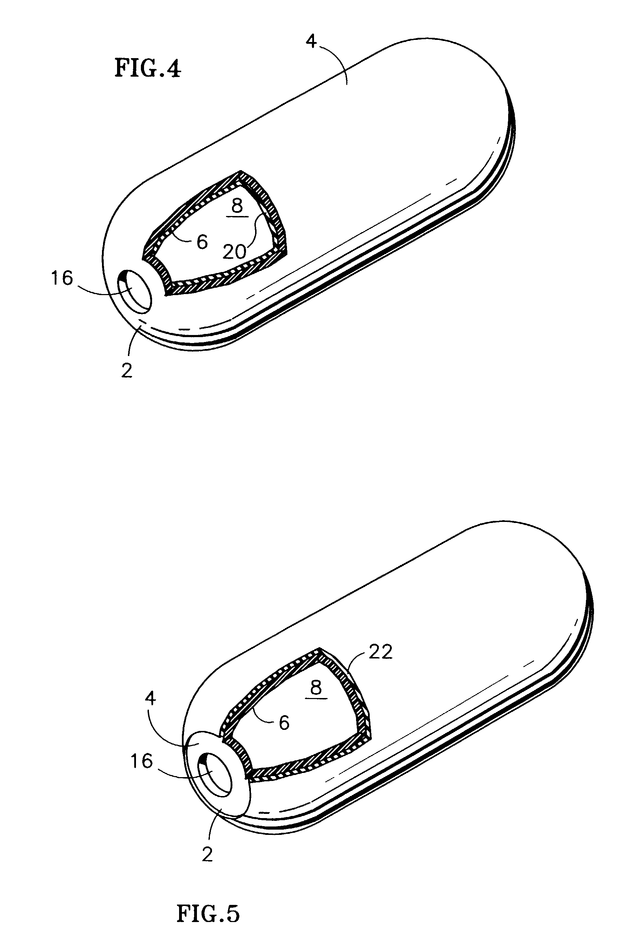

After cure, the mandrel **2** and composite casing **14** are separated by fracturing the mandrel **2** into readily removable pieces and removing the readily removable pieces. Preferably, the readily removable pieces will have a maximum dimension of about 1 inch (2.5 cm) and most preferably will be granular or almost powder like. The mandrel **2** may be fractured with any convenient fracturing means such as an expandable pressure bladder **20** that may be inserted into a mandrel's hollow core **8** as shown in Fig. 4 and expanded to induce sufficient force to fracture the mandrel **2** and provide a vehicle for ease of removal and containment of the mandrel pieces. Alternately, a collapsible bladder **22** that has been fitted over the mandrel's outer surface **4** before the winding operation as shown in Fig. 5 may be collapsed to induce sufficient force to fracture the mandrel **2**. Yet another option for the fracturing means is a cutting means, such as a wire mesh **24** embedded within the mandrel **2** that may be withdrawn with sufficient force to fracture or cut the mandrel **2** into readily removable pieces. The wire mesh **24** may be made from any material that has a suitable tensile strength, for example as least about 300,000 psi (2 MPa), to impart the desired forces. Preferable, wires used to make wire mesh **24** will be no more than about 0.040 inches (0.1 cm) in diameter to reduce the resistance to pulling through the foam mandrel **2**. Still another alternative is to surround the mandrel's outer surface **4** with a wire mesh **24** that may be withdrawn with sufficient force to fracture or cut the mandrel **2** into readily removable pieces.

The mandrel **2** may be separated from the composite casing **14** without a fracturing means by cooling the mandrel **2** to a temperature below about -10°F (-23°C) and impacting the mandrel with a stream of abrasive particles. In a similar vein, the mandrel **2** may be fractured using a dry ice blast cleaning method that impacts the mandrel **2** with dry ice particles with a force sufficient to cause the foam mandrel **2** to fracture into readily removable pieces. Dry ice blast cleaning equipment is commercially available from Cold Jet, Inc. (Loveland, Ohio). The dry ice particles may have a maximum dimension of about 0.25 inches (0.6 cm).

After the mandrel **2** has been fractured into readily removable pieces, the readily removable pieces (not shown) are removed from the composite casing **14** through an access port **16** or comparable opening in the composite casing **14**.

The foam mandrel **2** of the present invention has several benefits over the prior art. For example, it is relatively inexpensive and easy to fabricate into a variety of sizes and shapes. In particular, it is very easy to recontour the mandrel **2** into another shape after initial fabrication if required to support a particular program. Also, the mandrel **2** may be formed as a monolith and, therefore, does not require precision fitting of many small, finely machined parts as a segmented metal mandrel does. In addition, the foam mandrel **2** is much lighter than a metal mandrel resulting in greater structural rigidity, less deflection due to weight, and greater ease of handling.

## Claims

1. A method of making a filament wound composite casing (14), comprising the steps of:
a. providing a mandrel (2) that has an outer surface (4) of a desired shape, wherein the mandrel comprises a friable foam material;
b. winding one or more filaments (18) around the mandrel's outer surface to form an uncured casing (14) that has at least one access port (16);
c. curing the casing (14) to form a cured, composite casing;
d. separating the mandrel (2) from the composite casing (14) by fracturing the mandrel (2) into a plurality of readily removable pieces such that substantially all the mandrel (2) releases from the composite casing (14); and
e. removing the readily removable pieces from the composite casing (14) through the access port (16).

2. The method of claim 1, wherein the mandrel (2) is monolithic.

3. The method of claim 1, wherein the mandrel (2) comprises a plurality of segments (10), each having an outer surface of a desired shape.

4. The method of any preceding claim, wherein the friable foam material comprises a phenolic foam.

5. The method of any preceding claim, wherein the friable foam has a density of at least about 10 lb/ft³ (0.16 g/cm³), is dimensionally stable when subjected to compression forces of up to about 100 psi (690 kPa) during the winding and curing steps, and is friable when subjected to compression forces greater than about 200 psi (1380 kPa).

6. The method of any preceding claim, wherein the mandrel (2) has an inner surface (6) that defines a hollow core and the mandrel (2) is fractured into readily removable pieces by expanding an expandable pressure bladder (20) disposed inside the hollow core with sufficient force to fracture the mandrel (2) into readily removable pieces.

7. The method of any of claims 1 to 6, wherein the mandrel (2) has an inner surface (6) that defines a hollow core, the mandrel's outer surface comprises a collapsible bladder disposed around the friable foam material, and the mandrel is fractured into readily removable pieces by collapsing the bladder with sufficient force to fracture the mandrel into readily removable pieces.

8. The method of any of claims 1 to 6, wherein the mandrel (2) is fractured into readily removable pieces by cutting the mandrel (2).

9. The method of any of claims 1 to 6, wherein the mandrel (2) is fractured into readily removable pieces by impacting the mandrel with a stream of frozen particles.

10. The method of any of claims 1 to 6, wherein the mandrel (2) is fractured into readily removable pieces by chilling the mandrel and impacting the mandrel with abrasive particles.

11. A mandrel (2) for use in forming a filament wound composite casing having an outer surface (4) of a desired shape, comprising a friable foam material.

12. The mandrel of claim 11, further comprising an inner surface (6) that defines a hollow core.

13. The mandrel of claim 11 or 12, wherein the friable foam material comprises a phenolic foam.

14. The mandrel of claim 11, 12 or 13, wherein the friable foam has a density of at least about 10 lb/ft³ (0.16 g/cm³), is dimensionally stable when subjected to compression forces of up to about 100 psi (690 kPa) during the winding and curing steps, and is friable when subjected to compression forces greater than about 200 psi (1380 kPa).

15. The mandrel of claim 12, or claim 13 or 14 as dependent upon claim 12, further comprising an expandable pressure bladder (20) disposed inside the hollow core (6).

16. The mandrel of any of claims 11 to 14, further comprising a collapsible bladder (22) disposed on the outer surface.

17. The mandrel of any of claims 11 to 14, wherein a wire mesh (24) is embedded within the mandrel.

18. The mandrel of any of claims 11 to 14, further comprising a wire mesh (24) disposed on the outer surface.
